# EUROPEAN PATENT SPECIFICATION

(11) **EP 1 292 119 B1**
(45) Date of publication and mention of the grant of the patent: **23.01.2008**
(21) Application number: 02020239.6
(22) Date of filing: 10.09.2002
(51) Int. Cl.: H04N 1/60

(54) **Output image adjustment of image data**
Bildausgabekorrektur von Bilddaten
Correction d'une image de sortie à partir de données d'image

(30) Priority: 11.09.2001 JP 2001275169; 12.07.2002 JP 2002203591
(43) Date of publication of application: 12.03.2003
(60) Divisional application: 06014264.3
(73) Proprietor: Seiko Epson Corporation, Shinjuku-ku Tokyo 163-0811 (JP)
(72) Inventor: Fukasawa, Kenji, Suwa-shi, Nagano-ken, 392-8502 (JP)
(74) Representative: Winter, Brandl, Fürniss, Hübner Röss, Kaiser, Polte Partnerschaft Patent- und Rechtsanwaltskanzlei

(56) References cited:
- EP-A- 1 271 404
- US-A- 5 754 746
- US-A- 6 091 518
- "Adobe Photoshop 5.0 User Guide" ADOBE PHOTOSHOP 5.0 USER GUIDE, XX, XX, 1998, pages 79-101, XP002205204

## Description

### BACKGROUND OF THE INVENTION

### TECHNICAL FIELD

The present invention relates to a technique for processing image data.

### BACKGROUND ART

In contrast to ordinary photosensitive silver salt color cameras whose typical output mode is printing onto photographic paper, digital still camera (DSC) and digital video camera (DVC) photographs, and digital images input by a scanner, have the advantage that images can be manipulated easily on a personal computer.

However, if image processing is not performed properly, some data in the source image may be lost, resulting in degraded quality of image data. For example, range adjustment is typically done to improve contrast, but if range adjustment is performed in a color space (color representation system) in which highly saturated colors are represented by negative color values, the negative color values wind up being clipped to zero, so that high saturation information is lost.

Proper image processing requires properly setting the working color space for processing of image data, but setting working color space properly requires advanced knowledge of image processing. Further, designating a desired color space for the working color space requires the user to designate the working color space using advanced retouching software, a tedious process.

Using a working color space that has a wider color representation range than the color space of the source image data is useful in improving saturation, but on the other hand tends to depress tone characteristics; compensating for depressed tone characteristics requires setting parameters that affect image qualities to proper values, and setting parameter values appropriately for image data requires a knowledge of image processing.

Also, if a wider working color space is simply selected without regard to the reproducible color range of the output device used to output image data, it may be impossible to accurately reproduce the colors of the image data, so that the advantages of using a wider color space are lost.

Document EP-A-1 271 404, which was published after the application date of the present application, describes an image output system, in which image data generated by a digital still camera is output with a color printer. The digital still camera stores image processing control data pre-set by a maker of the digital still camera to be changeable for each image, and a user's setting of offset data. The processing control data include a parameter "target color space", which is a parameter for specifying the color space used in the series of image processing according to the color space used in the process of generating the image data, for example, sRGB color space or NTSC color space. The image output system then generates an image file including the image data, the image processing control data, and the offset data. The color printer makes the image data to be subjected to a preset series of image processing based on the image processing control data in the image file, and outputs a resulting processed image. The series of image processing includes converting the image data in the YCbCr color space into image data in an sRGB color space, converting the image data in the sRGB color space into an XYZ color space (target color space) and converting the color space of the image data of the XYZ into a wRB color space (working color space), wherein the wRGB color space is wider than the sRGB color space.

In "Adobe Photoshop 5.0 User Guide", 1998, pages 79-101 there is described converting the color space of open images from any color space to the color spaces defined in the RGB setup, Grayscale setup, and CMYK setup dialog boxes according to a program which runs on a computer.

Document US-A-6 091 518 describes an image transfer apparatus which cooperates with an image reception and reproduction means to reduce network burden while transferring profile information. A profile storage device is connected to a network. The profile storage device stores profile information for a color correction made to color image information. An image transmission device transmits profile specification information specifying the profile information corresponding to the color image information together with the color image information. A receiving device receives the color image information and the profile specification information. A color correction device then uses the profile information to make a color correction in the color image information. A reproducing device then reproduces the color-corrected image information.

The above problems are addressed by the present invention, which nas as an object to provide an image processing device that enables image processing to be accomplished simply, in an appropriate working color space, with reference to particular image data. A further object is to provide an image data generating device wherein appropriate information relating to working color space may be associated with image data.

### SUMMARY OF THE INVENTION

The object is solved by the features of the independent claims. The dependent claims are directed to preferred embodiments of the invention.

According to the image pick-up device, image data can be output in association with working color space designating information designating a working color space for image processing performed by an image processing device that will be used to process the image data, thereby enabling a working color space appropriate for the image data to be designated in the image data generating device.

The image pick-up device may further comprise a color conversion table-designating information generating unit for generating color conversion table-designating information that designates a color conversion table used to generate said output image data in an output processing control device that generates output image data using said image data. With this arrangement, a color conversion table can be designated with reference to a designated working color space, whereby the results of image processing obtained by designating working color space can be output more accurately.

The image pick-up device may further comprise an image processing control data generating unit for designating image processing conditions in said image processing device with reference to said acquired working color space designating information, wherein said output unit outputs said image data associated with said image processing control data as well as with said working color space designating information. With this arrangement, image processing conditions for a designated working color space can be designated by the image data generating device for a particular image processing device, so that image processing can be performed appropriately for individual sets of image data.

The image pick-up device may further comprise an image data generating unit for generating said image data; and a memory unit for storing a multitude of sets of said working color space designating information; wherein said image data acquisition unit acquires said generated image data; and said working color space designating information acquisition unit acquires said working color space designating information from said memory unit. This allows a working color space for particular image data to be selected from among a multitude of sets of working color space designating information.

In the image pick-up device, said output unit may output said image data and said working color space designating information as a single image file. In this way image data and working color space designating information may be acquired by handling a single image file, and the association between the two can be easily preserved.

In the image pick-up device, said working color space designating information may designate a color space having a different coordinate system than the color space of said image data. Designating a coordinate system appropriate to the color reproduction characteristics of an output device enables high saturation images to be output.

### BRIEF DESCRIPTION OF THE FIGURES

Figure 1 is an illustrative diagram of an exemplary image processing system in which the image processing device pertaining to Embodiment 1 may be implemented.
Figure 2 is an illustrative diagram showing the general internal structure of an image file GF stored in the Exif file format.
Figure 3 is an illustrative diagram showing exemplary image processing control information Gl parameters stored in Makernote.
Figure 4 is a flow chart showing a main processing routine for image processing in personal computer 20 pertaining to Embodiment 1.
Figure 5 is a flow chart showing the flow of image processing based on color space information in personal computer 20 pertaining to Embodiment 1.
Figure 6 is a flow chart showing the flow of normal image processing in personal computer 20 pertaining to Embodiment 1.
Figure 7 is a flow chart showing the flow of a print data generating process in personal computer 20 pertaining to Embodiment 1.
Figure 8 is a flow chart showing the flow of image processing based on color space information in personal computer 20 pertaining to Embodiment 2.
Figure 9 is a flow chart showing the flow of normal image processing in personal computer 20 pertaining to Embodiment 2.
Figure 10 is a flow chart showing the flow of a print data generating process in personal computer 20 pertaining to Embodiment 2.

### DESCRIPTION OF THE PREFERRED EMBODIMENTS

A fuller understanding of the image processing device of the invention is provided through the following description of the embodiments, made with reference to the accompanying drawings.
A. Arrangement of image processing system including image processing device pertaining to Embodiment 1
B. Image processing in image processing device pertaining to Embodiment 1
C. Image processing in image processing device pertaining to Embodiment 2
D. Other embodiments

### A. Arrangement of image processing system including image processing device pertaining to Embodiment 1

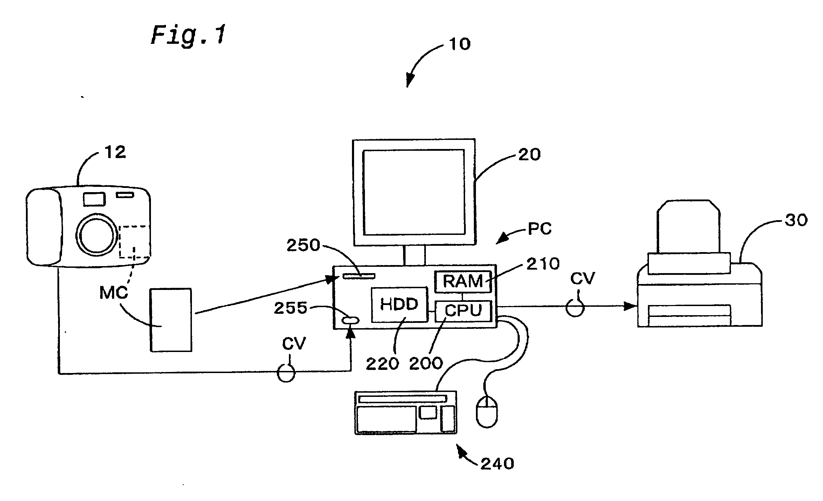

The following description of the arrangement of an image processing system in which an image processing device pertaining to a first embodiment may be implemented makes reference to Fig. 1. Fig. 1 is an illustrative diagram of an exemplary image processing system in which the image processing device pertaining to Embodiment 1 may be implemented.

Image processing system 10 comprises a digital still camera 12 serving as an input device for generating data GD to which image processing conditions will be appended; a personal computer 20 serving as an image processing device that performs image processing, described later, using image data GD generated by digital still camera 12; and a color printer 30 serving as the image output device for personal computer 20. In the image processing device pertaining to this embodiment, image data GD (image file GF) for processing is input from digital still camera 12 to personal computer 20 via a connector cable CV or memory card MC.

Instead of a personal computer 20, the image processing device could also be, for example, a stand-alone printer having an image processing function. Instead of a printer 30, the output device could be a display device, e.g. a CRT or LCD display, a projector, or the like. In the following description, the output device is assumed to be a color printer 30 connected to a personal computer 20.

Personal computer 20 is a computer of the type used ordinarily, comprising a CPU 200 for executing the image processing program pertaining to the invention; RAM 210 for temporarily storing results of operations in CPU 200, image data, etc.; a hard disk drive (HDD) 220 storing the image processing program; a display device 230 for displaying results of operations in CPU 200, image data, etc.; and input devices, namely, a keyboard and mouse, for entering commands, numerical values etc. Personal computer 20 also has a memory slot 250 for inserting a memory card MC, and an I/O terminal 255 for connection to a connector cable CV from digital still camera 12 etc.

Digital still camera 12 converts optical information to an analog electrical signal by means of a CCD or photomultiplier, and converts the resultant analog electrical signal to a digital signal with an A/D converter to generate digital image data. Digital image data so generated is typically stored on a memory card MC serving as the storage device. The format for storing image data in digital still camera 12 is typically the JPEG format, but other storage formats could be employed, such as TIFF, GIF, BMP, or RAW data format.

The digital still camera 12 in accordance with the present embodiment generates an image file in which is embedded, for each set of image data GD, image processing control information Gl consisting of working color space information that designates a working color space for performing image processing in an image processing device (computer, printer). Work color space may be selected arbitrarily via a liquid crystal screen etc. provided to digital still camera 12, or designated by default in digital still camera 12 to a predetermined working color space. The designated working color space is advantageously an RGB color space having a wider color representation range than the color space of image data GD, i.e., wider than the RGB color space of digital still camera 12. Digital still camera 12 may also select or generate image processing control information Gl with reference to the designated working color space. In terms of achieving more appropriate image processing, it is desirable to optimize image processing control information Gl for each working color space.

Image data GD generated by digital still camera 12 typically has a data structure in accordance with the format specified for digital still cameran image files (Exif). The Exif file specification was developed by the Japan Electronics and Information Technology Industries Association (JEITA).

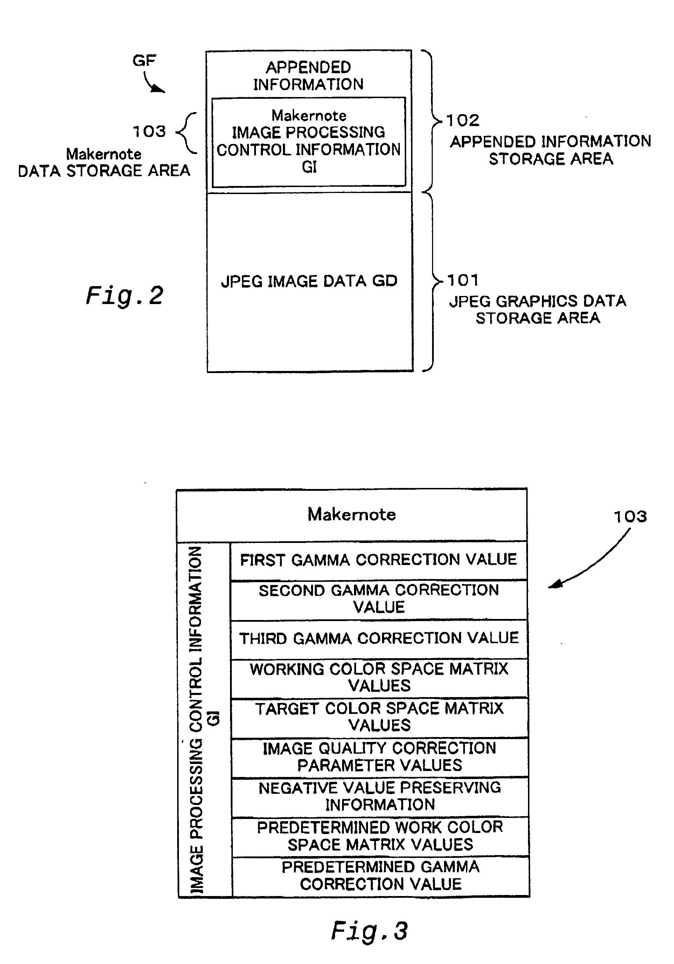

The following description of general structure in an image file having a file format in accordance with the Exif file format makes reference to Figs. 2 and 3. Fig. 2 is an illustrative diagram showing the general internal structure of an image file GF stored in the Exif file format. Fig. 3 is an illustrative diagram showing exemplary image processing control information Gl parameters stored in an extension information storage area. The terms "file structure", "data structure" and "storage area" herein refer to files, data etc. stored in a memory device in file or datan image form.

Image file GF, here, an Exif file, includes a JPEG image data storage area 101 containing image data GD in JPEG format; and an extension information storage area 102 containing appended information of various kinds relating to the stored JPEG image data GD. Appended information storage area 112 contains information relating to settings when the JPEG image was shot (e.g. color space at shooting, shooting date, exposure, shutter speed, etc.), and thumbnail image data for JPEG images stored in JPEG image data storage area 101. When image data GD is written to a memory card MC, this appended information is automatically stored in appended information storage area 102. In this embodiment, appended information storage area 102 also has an image processing control information storage area 103, shown in Fig. 3, for storing image processing control information Gl used to control image processing of image data GD in personal computer 20.

Image processing control information Gl may also be stored in a Makernote data storage area 103 --this is an undefined area currently left available by DSC manufacturers- in appended information storage area 102.

Image processing control information Gl contains information that, in consideration of the color reproduction characteristics and image output characteristics of an output device such as printer 30, indicates image output conditions that will give optimal image output result. Information contained by way of image processing control information Gl may include, for example, working color space matrix values designating a working color space for image processing by personal computer 20; a second gamma correction value (working color space gamma correction value); target color space matrix values designating a target color space; a first gamma correction value (DSC gamma correction value); a third gamma correction value (printer color space gamma correction value); matrix values for a predetermined working color space; and a predetermined gamma correction value (gamma correction value for a predetermined working color space); as well as other parameters relating to image quality such as contrast, color balance adjustment, sharpness, and color correction.

Color printer 20 is capable of color image output, for example, an ink-jet printer that forms images by ejecting inks of four colors --for example, cyan (C), magenta (M), yellow (Y) and black (K)-- onto a print medium to produce a dot pattern; or an electrophotographic printer that produces images by transferring and fixing color toner onto a print medium. Besides the four colors listed above, light cyan (LC), light magenta (LM), or dark yellow (DY) may also be used.

### B. Image processing in image processing device pertaining to Embodiment 1

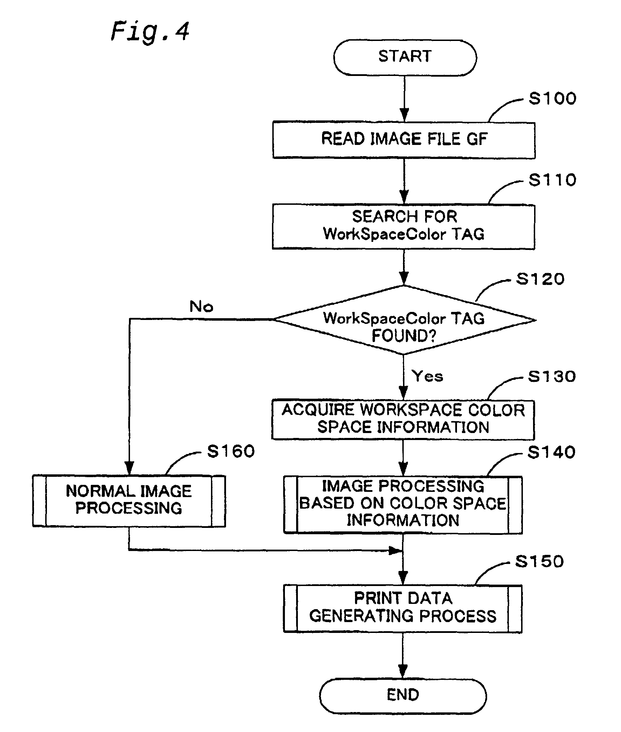

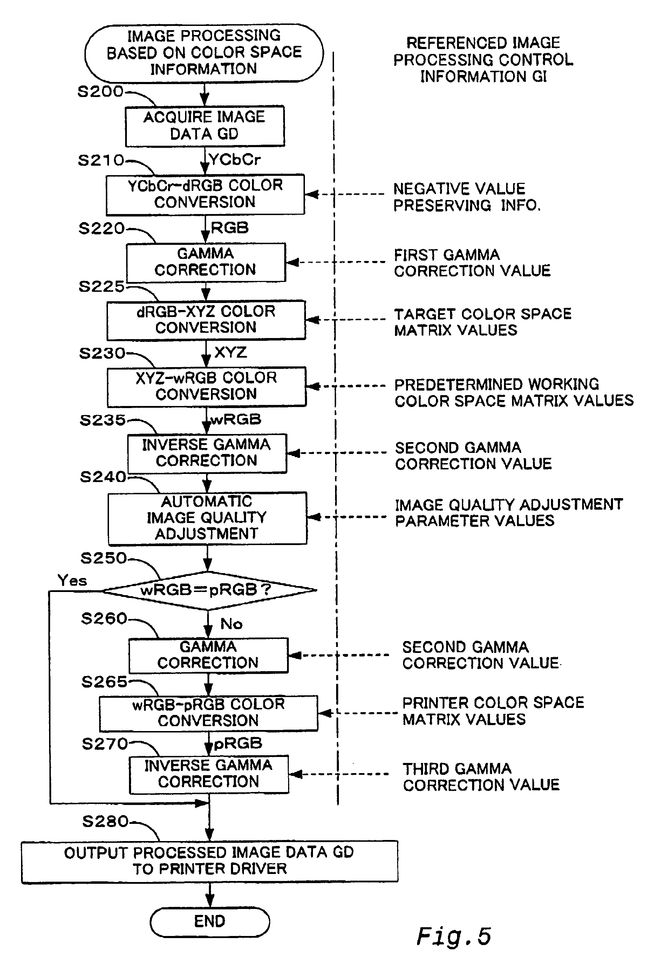

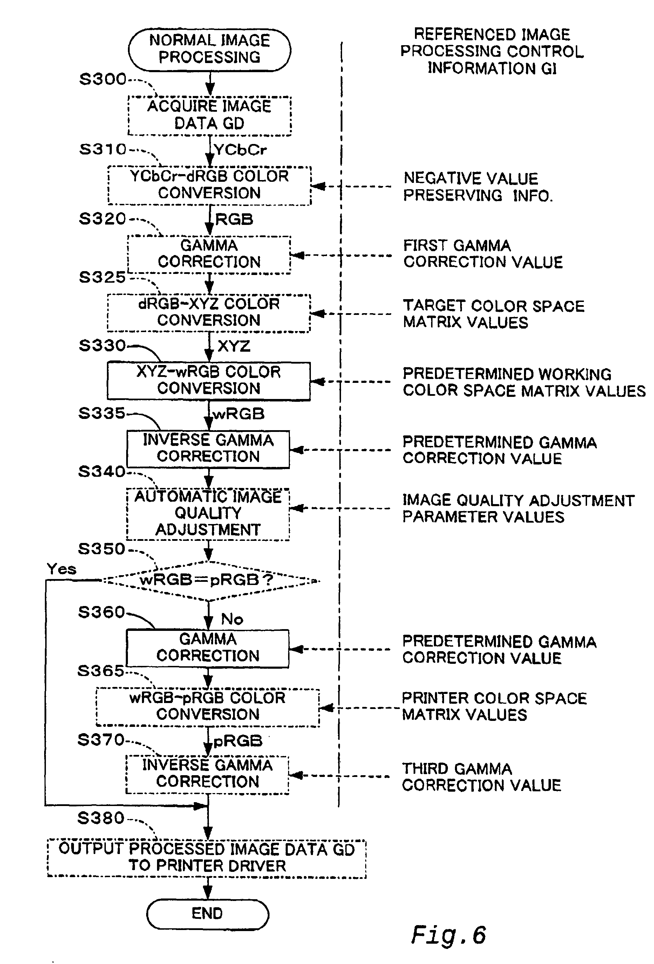

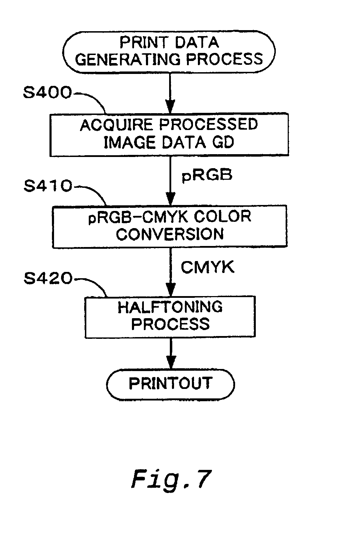

Image processing in personal computer 20 pertaining to Embodiment 1 is now described with reference to Figs. 4 -7. Fig. 4 is a flow chart showing a main processing routine for image processing in personal computer 20 pertaining to Embodiment 1. Fig. 5 is a flow chart showing the flow of image processing based on color space information in personal computer 20. Fig. 6 is a flow chart showing the flow of normal image processing in personal computer 20. Fig. 7 is a flow chart showing the flow of a print data generating process in personal computer 20.

When, for example, a memory card MC is inserted into slot 250, or the other end of a connector cable CV connected to DSC 12 is connected to I/O terminal 255, CPU 200 of personal computer 20 runs an application for executing the main processing routine. The following processes are executed in accordance with the processing steps of the application. CPU 200 reads the image file GF from memory card MC via slot 250 or connector cable CV, and temporarily places the read image file GF in RAM 210 (Step S100). CPU 200 acquires the image processing control information Gl from the image file GF and searches for a WorkSpaceColor tag designating a working color space for image processing (Step S110). If CPU 200 successfully finds a WorkSpaceColor tag (Step S120: Yes) it acquires, from the designated working color space information, working color space matrix values and a second gamma correction value which is the gamma correction value for the designated working color space (Step S130). CPU 200 then executes image processing (described in detail hereinbelow) of image data GD contained in the image file GF, using the acquired working color space matrix values (Step S140). In addition to working color space matrix values, CPU 200 also acquires parameter values designating image processing conditions, including the parameter values given in Fig. 3. CPU 200 generates print data from the processed image data GD for output to printer 30 (Step S150) and terminates the main processing routine.

In the event that a WorkSpaceColor cannot be found, (Step S120: No), CPU 200 instead acquires from image processing control information Gl predetermined working color space matrix values and a predetermined gamma correction value which is the gamma correction value for the predetermined working color space, and executes image processing of image data GD contained in the image file GF, using the predetermined working color space matrix values (Step S160). CPU 200 generates print data from the processed image data GD for output to printer 30 (Step S150) and terminates the main processing routine.

The following detailed description of image processing using designated working color space information makes reference to Fig. 7. CPU 200 acquires image data GD from the read out image file GF (Step S200). Digital still camera 12, as noted previously, stores image data GD as a file of JPEG format, and in a JPEG file, the color space of the generated image data GD (RGB color space) in converted to a YCbCr color space in order to increase compression. Accordingly, CPU 200 executes a YCbCr-dRGB color conversion process to convert the YCbCr image data GD to dRGB image data GD, dRGB being the color space used in DSC 12 (Step S210). In performing the color conversion, a matrix operation is performed using a matrix S, defined in the JPEG File Interchange Format (JFIF) specification.

When performing operations using matrix S, CPU 200, in accordance with negative value preserving information acquired as image processing control information Gl, preserves negative data values (color values) included in the converted RGB image data GD and positive appended data values (color values) that lie outside the gamut of the particular RGB color space, or clips them to the gamut of the particular RGB color space. The particular RGB color space is, for example, the sRGB color space, which is commonly employed in standard operating systems (OS). Negative value preserving information may be handled as working color space designating information. Where a color space having the same coordinate system as the image data GD color space serving as the working color space (sRGB, for example) is designated, by including information for preserving color values that are out of gamut with respect to the image data GD color space (i.e., negative color values and positive appended data values) during image processing, negative color values can be treated as valid values, at least during image processing, making it possible to prevent deterioration in image qualities (such as saturation).

To linearize the relationship with XYZ values, CPU 200 performs gamma correction of the resultant dRGB image data GD, using a first gamma correction value designated in the image processing control information Gl (Step S220). CPU 200 applies matrix values of a target color space designated by image processing control information Gl to matrix values making up a matrix M, to execute a dRGB-XYZ color conversion process (Step S225). Matrix M is a 3 x 3 matrix.

To perform image adjustment based on selected image adjustment parameters, CPU 200 executes a process to convert the color space of the image data GD from the XYZ color space to the wRGB color space designated as the working color space, i.e. an XYZ-wRGB color conversion process (Step S230). This color conversion is accomplished by an operation using an inverse matrix N⁻¹ that is the inverse of the 3 x 3 matrix N defining wRGB to XYZ color conversion. CPU 200 handles matrix values of the working color space designated by the image processing control information Gl as matrix values of matrix N when performing the inverse matrix operation. CPU 200 performs inverse gamma correction using a second gamma correction value that is a gamma correction value for the working color space designated by the image processing control information Gl (Step S235).

The dRGB image data is converted to wRGB image data by means of color conversion via the XYZ color space. For the purposes of description herein, matrix operations performed with matrix M and inverse matrix N⁻¹ are described as being independent operations, but in actual practice, a combined matrix could be generated from matrix M and inverse matrix N⁻¹, and dRGB-wRGB color conversion performed with this combined matrix MN⁻¹, to speed up operations.

The color space of the image data GD resulting from the inverse matrix N⁻¹ operation, namely, the working color space, is the wRGB color space. In preferred practice, this wRGB color space will have a gamut wider than the sRGB color space. Where the gamut of the wRGB color space is wider than the commonly used sRGB color space, negative color values and positive appended color values not included in the sRGB color space can be included in the gamut of the wRGB color space, allowing saturation not reproducible with the sRGB color space to be reproduced, so that the original high saturation of image data GD can be reproduced.

By using as the working color space an RGB color space whose gamut includes more color values, the results of subsequent image adjustment can be improved.

In order to characterize image qualities, CPU 200 now performs an automatic image quality adjustment process with the working color space wRGB designated by the image processing control information Gl (Step S240). This process is performed using arbitrarily set image quality adjustment parameters included in the image processing control information Gl. When performing automatic image quality adjustment, CPU 200 analyzes the characteristics of image data GD, and adjusts image data GD image quality adjustment parameters to reflect image quality adjustment parameters designated in the image processing control information Gl, so as to reduce or eliminate differences between baseline values established for the parameters and values of parameters representing image qualities of image data GD. Image quality adjustment parameter values are used to modify baseline values, or change the extent (level) of reduction in differences between baseline values and image quality parameter values. Alternatively, they are used to directly modify image quality parameter values.

CPU 200 now determines whether the pRGB color space (the color space of printer 30) matches the wRGB color space (Step S250). Specifically, it determines whether the RGB-CMYK color conversion look-up table (LUT) used by the printer driver for printer 30 corresponds to the wRGB color space designated as the working color space. Since the RGB-CMYK color conversion LUT is stored on HDD 220 when the printer driver is installed on personal computer 20, CPU 200 can acquire device type information for printer 30 from the printer driver, and acquire the RGB-CMYK color conversion LUT characteristics.

If CPU 200 determines that the pRGB color space and wRGB color space do not match (Step S250: No), it performs a wRGB-pRGB color conversion process to convert wRGB image data to pRGB image data. First, to linearize the relationship with XYZ values, CPU 200 performs gamma correction of the image data GD using a second gamma correction value (Step S260). It then acquires the working color space matrix values from the image processing control information Gl and the printer color space matrix values for printer 30 and performs wRGB-pRGB color conversion (Step S265). As with the dRGB-wRGB color conversion process described previously, this wRGB-pRGB color conversion process is performed via an XYZ color space, using a matrix M' having the working color space matrix values and a matrix N' having the printer color space matrix values. That is, wRGB data is converted to XYZ data by means of a matrix operation using matrix M', and XYZ data is converted to pRGB data by means of a matrix operation using matrix N'.

CPU 200 performs inverse gamma correction using a third gamma correction value that is a gamma correction value for the printer color space from image processing control information Gl (Step S270), outputs the image data GD converted to the pRGB color space to the printer driver (Step S280), and terminates the main routine.

If the pRGB color space and wRGB color space are determined to match (Step S250: Yes), the printer driver will be able to handle processed wRGB image data as-is, and so the If CPU 200 outputs the wRGB image data GD to the printer driver (Step S280), and terminates the main routine.

Referring now to Fig. 6, the details of normal image processing, performed when no working color space has been designated, is described. In the normal image processing shown in Fig. 6, processes identical to processes performed during image processing on the basis of working color space information described previously with reference to Fig. 5, namely, Steps 300 -325, Step S340, Step S350, and Steps S365 -S380, are identical to Steps S200 -S225, Step S240, Step S250, and Steps S265 -S280 described previously with reference to Fig. 5; in the drawing these are indicated by broken lines, and not described [where to do so would be redundant].

In Step S325, CPU 200, having performed the dRGB-XYZ color conversion process, performs a process to convert the image data GD color space from the XYZ color space to the wRGB color space, namely, an XYZ-wRGB color conversion process (Step S330). CPU 200 handles matrix values of a predetermined working color space, included in image processing control information Gl, as matrix values of matrix N when performing the inverse matrix operation. CPU 200 performs inverse gamma correction using a predetermined gamma correction value that is a gamma correction value for the predetermined working color space included in image processing control information Gl (Step S335).

CPU 200 then executes Step S340 and Step S350, and executes gamma correction using the predetermined gamma correction value to perform the wRGB-pRGB color conversion process (Step S360). It subsequently executes Steps S365 -S380, outputs the processed pRGB color space image data GD to the printer driver, and terminates the main routine.

The following description of the print data generating process makes reference to Fig. 7. The process is typically realized as so-called printer driver function, and may be realized as a separate module from image processing, or a process integrated with image processing. CPU 200 acquires the processed image data GD (Step S400), and, referring to a pwRGB-CMYK conversion look-up table (LUT) stored on HDD 220, converts pRGB image data to CMYK image data (Step S410). That is, it converts image data GD consisting of R · G · B tone values to tone value data for the colors used by printer 30, for example, the six colors C · M · Y · K · LC · LM.

CPU 200 then performs a halftoning process on the CMYK image data (Step S420), sends the image data GD as raster data to the print control portion (not shown) of printer 30, executes print out, and terminates the main routine. An error diffusion method or systematic dithering method is typically used as the method for the halftoning process.

In this embodiment, all image data is performed in personal computer 20, but instead some or all image processing could be performed in printer 30. In this case an application for executing the image processing functions described with reference to Fig. 7 will be stored in a storage device (hard disk, ROM etc.) provided to the printer 30. The printer 30 is supplied with an image file GF, generated by digital still camera 12, via a cable CV or memory card MC. When printer 30 detects insertion of a memory card MC or insertion of a cable CV, the application may load automatically, whereby reading of the image file GF, analysis of image processing control information Gl, and image data GD conversion and adjustment are performed automatically.

By means of image processing by personal computer 20 in accordance with Embodiment 1 described hereinabove, a working color space for performing image processing is established on the basis of image processing control information Gl contained in the image file GF, enabling image quality adjustment processing to be performed on image data GD. Thus, image processing (image quality adjustment) may be done using an appropriate working color space for each set of image data GD. For example, by designating as the working color space an RGB color space having a wider gamut than the dRGB color space of the image data GD (the RGB color space used by digital still camera 12), data values (color values) that are out of gamut of the dRGB color space, and particularly negative data values (color values), can be handled as valid, to give printed results having higher saturation. That is, printed results having higher saturation can be obtained by using color information that cannot be reproduced in the dRGB color space due to being out of gamut.

By means of personal computer 20 pertaining to Embodiment 1, image data GD of the wRGB color space (the working color space) can be converted to the printer RGB color space (pRGB color space) corresponding to the RGB-CMYK color conversion LUT used by the printer driver. Thus, image data GD having been subjected to image quality adjustment in a designated working color space can be output correctly to a variety of printers 30. In other words, the image processing device of this embodiment device can be made compatible with a variety of printers.

By means of a digital still camera 12 in accordance with Embodiment 1, there can be generated an image file that contains image data GD and image processing control information Gl that designates the color space of the working color space for performing image processing by personal computer 20. Accordingly, the working color space for use by personal computer 20 can be designated by means of digital still camera 12. By designating as the working color space a color space that includes in the gamut thereof all color values of the image data GD, output of image data GD to printer 30 without any loss of saturation is possible.

Designating a working color space in digital still camera 12 allows image processing (image quality adjustment) in personal computer 20 to be performed using the designated working color space, thereby obviating the need for the user to select working color space on personal computer 20, and affording high image quality obtained through designation of working color space in a simple manner.

### C. Image processing in image processing device (personal computer 20) pertaining to Embodiment 2

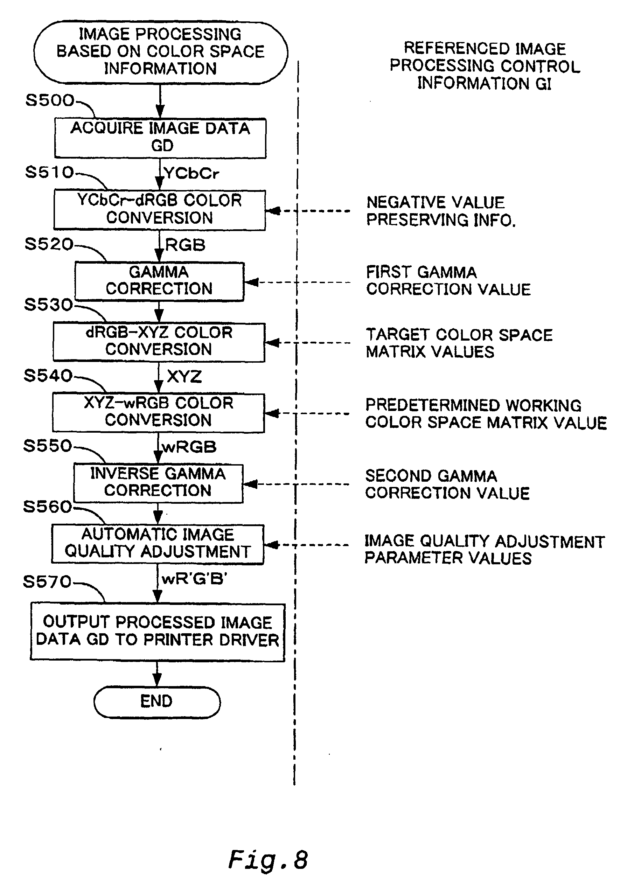

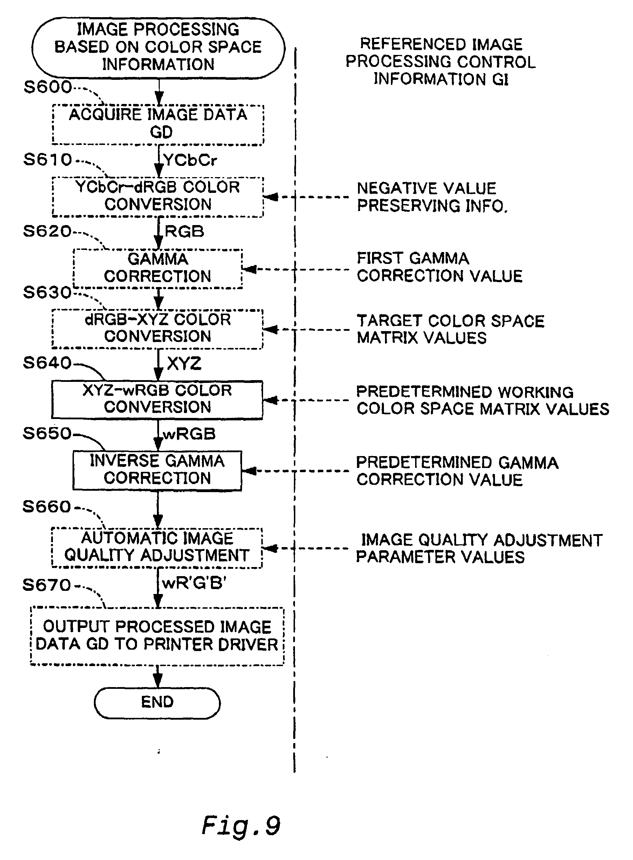

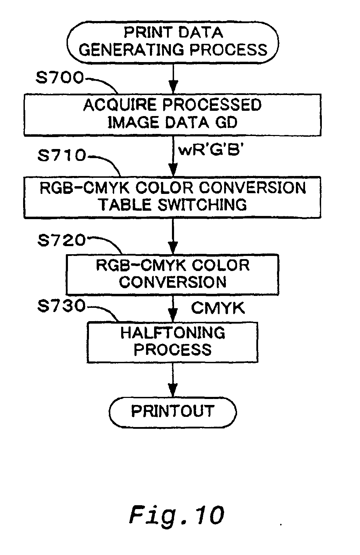

Image processing in personal computer 20 pertaining to Embodiment 2 is now described with reference to Figs. 8 -10. Fig. 8 is a flow chart showing the flow of image processing based on color space information in personal computer 20. Fig. 9 is a flow chart showing the flow of normal image processing in personal computer 20. Fig. 10 is a flow chart showing the flow of a print data generating process in personal computer 20. The main processing routine of image processing in personal computer 20 is similar to the processing routine described with reference to Fig. 4, and will not be described here.

The following detailed description of image processing using designated working color space information makes reference to Fig. 8. CPU 200 acquires image data GD from the read out image file GF (Step S500) and converts the YCbCr image data to dRGB image data, dRGB being the color space used in DSC 12 (Step S510). In performing the color conversion, a matrix operation is performed using a matrix S, defined in the JPEG File Interchange Format (JFIF) specification.

When performing operations using matrix S, CPU 200 refers to negative value preserving information acquired as image processing control information Gl, and in accordance with this negative value preserving information performs clipping of the image data GD. CPU 200 performs gamma correction of the resultant dRGB image data GD, using a first gamma correction value designated by the image processing control information Gl (Step S520), and applies matrix values of a target color space, also designated by image processing control information Gl, to matrix values making up a matrix M, to execute a dRGB-XYZ color conversion process (Step S530).

To perform image adjustment based on selected image quality adjustment parameters, CPU 200 executes a process to convert the color space of the image data GD from the XYZ color space to the wRGB color space designated as the working color space, i.e. an XYZ-wRGB color conversion process (Step S540). CPU 200 then performs inverse gamma correction using a second gamma correction value that is a gamma correction value for the working color space designated by the image processing control information GI (Step S550).

The dRGB image data is converted to wRGB image data by means of color conversion via the XYZ color space. For the purposes of description herein, matrix operations performed with matrix M and inverse matrix N⁻¹ are described as being independent operations, but in actual practice, a combined matrix could be generated from matrix M and inverse matrix N⁻¹, and dRGB-wRGB color conversion performed with this combined matrix MN⁻¹, to speed up operations.

In order to characterize image qualities, CPU 200 now performs an automatic image quality adjustment process with the working color space wRGB designated by the image processing control information Gl (Step S560). This process is performed using arbitrarily set image quality adjustment parameters included in the image processing control information Gl. CPU 200 outputs the wRGB image data to the printer driver (Step S570), and terminates the main routine.

Referring now to Fig. 9, the details of normal image processing, performed when no working color space has been designated, is described. In the normal image processing shown in Fig. 9, processes identical to processes performed during image processing on the basis of working color space information described previously with reference to Fig. 8, namely, Steps 600 -630, Step S660 and Step S670, are identical to Steps S500 -S530, Step S560 and Step S570 described previously with reference to Fig. 8; in the drawing these are indicated by broken lines, and not described.

In Step S630, CPU 200, having performed the dRGB-XYZ color conversion process, performs a process to convert the image data GD color space from the XYZ color space to the wRGB color space, namely, an XYZ-wRGB color conversion process (Step S640). CPU 200 handles matrix values of a predetermined working color space, included in image processing control information Gl, as matrix values of matrix N when performing the inverse matrix operation. CPU 200 performs inverse gamma correction using a predetermined gamma correction value that is a gamma correction value for the predetermined working color space included in image processing control information Gl (Step S650).

CPU 200 then executes Step S660, outputs the processed wRGB color space image data GD to the printer driver (Step S670), and terminates the main routine.

The following description of the print data generating process makes reference to Fig. 10. The process is typically realized as so-called printer driver function. CPU 200 acquires the processed image data GD (Step S700), and switches the RGB-CMYK color conversion table to the RGB-CMYK color conversion table corresponding to the working color space RGB designated by the image processing control information Gl (Step S710). Specifically, a multiplicity of RGB-CMYK conversion LUTs corresponding to a multiplicity of RGB color spaces have been stored on HDD 220 when the printer driver is installed on personal computer 20, for example; and CPU 200 selects the appropriate RGB-CMYK conversion LUT.

Referring to the switched RGB-CMYK conversion look-up table (LUT), CPU 200 converts RGB image data to CMYK image data (Step S720). That is, it converts image data GD consisting of R · G · B tone values to tone value data for the colors used by printer 30, for example, the six colors C · M · Y · K · LC · LM.

CPU 200 then performs a halftoning process (tone number conversion process) on the CMYK image data (Step S730), sends the image data GD as raster data to the print control portion (not shown) of printer 30, executes print out, and terminates the main routine. An error diffusion method or systematic dithering method is typically used as the method for the halftoning process.

By means of image processing by personal computer 20 in accordance with Embodiment 2 described hereinabove, a working color space for performing image processing is established on the basis of image processing control information Gl contained in the image file GF, enabling image quality adjustment processing to be performed on image data GD. Thus, by designating as the working color space an RGB color space having a wider gamut than the dRGB color space of the image data GD (the RGB color space used by digital still camera 12), data values (color values) that are out of gamut of the dRGB color space, and particularly negative data values (color values), can be handled as valid, to give printed results having higher saturation. That is, printed results having higher saturation can be obtained by using color information that cannot be reproduced in the dRGB color space due to being out of gamut.

By means of the personal computer 20 pertaining to Embodiment 2, the RGB-CMYK color conversion LUT used by the printer driver can be switched to the corresponding RGB-CMYK conversion LUT with reference to the wRGB color space which the is working color space. This makes it possible to eliminate the color conversion process from the wRGB color space to the pRGB color space in personal computer 20, so that image processing speed can be increased.

### D. Other embodiments

During image processing in personal computer 20, in the event that no working color space is designated, of the automatic image quality adjustments, those image quality adjustments made using image quality adjustment parameters that directly modify image quality parameters can be performed subsequent to the YCbCr-RGB color conversion process. Since no working color space is designated, performing image processing (image quality adjustment) in the RGB color space of image data GD, i.e. the RGB color space of DSC 12 (dRGB) will result in the color values of the image data GD being preserved.

In each of the image processing embodiments described hereinabove, a color printer 30 is used as the output device; however, a CRT, LCD, projector or other display device could be used as the output device. In this case, depending on the display device used as the output device, an image processing program (display driver) for executing the image processing described with reference to Fig. 4 etc. could be run, for example. Or, where functioning as a CRT or other such computer display device, the image processing program could be run on the computer. In any case, the image data GD which is ultimately output will have an RGB color space, rather than a CMYK color space.

In this case, in a manner analogous to being able to output image data GD subjected to image quality adjustment in a selected working color space to a color printer 30, image data GD subjected to image quality adjustment in a selected working color space may be displayed on a CRT or other display device. Thus, by including parameters appropriate for a CRT or other display device in the image processing control information Gl of an image file GF, or by including parameters optimized for the display characteristics of individual display devices, image data GD generated by a digital still camera 12 may be displayed more accurately.

The preceding embodiments describe generation of image files GF by a digital still camera 20, but image file GF could instead be generated with a digital video camera (DVC), scanner or other such input device (image file generating device). Where image files are generated by a digital video camera, these may be image files that contain still image data and output control information, or video files that contain video data and output control information, in MPEG or other format. Where video files are used, output control may be performed with reference to output control information for some or all of the video frames.

In the embodiments described hereinabove, the use of an RGB color space as the working color space is described, but instead a YCbCr color space could be used as the working color space. While RGB color space data (RGB data) is output to a color printer, YCbCr color space data (YCbCr data) could be output instead. In this case the personal computer 20 will be provided with an RGB-YCbCr color conversion function, and a YCbCr-CMYK color conversion function (e.g. LUTs).

The parameters given hereinabove are merely exemplary, and imply no limitation of the invention herein to these parameters. The matrices S, M, N⁻¹, M' and N'⁻¹ given the Equations are likewise merely exemplary, and may be modified appropriately with reference to working color space, target color space, color space utilizable by color printer 30, etc.

While the preceding embodiments describe the use of a digital still camera 12 as the image file generating device, a scanner, digital video camera, or other device could be used instead Where a scanner is used, designation of image processing control information Gl for image file GF may be performed on computer 20, or on the scanner independently, where the scanner is provided with a Preset button having settings information pre-assigned to it for setting information, or a Settings button and a display screen for making settings.

While Embodiment 1 describes an Exif format file as an exemplary image file GF, the image file format herein is not limited thereto. It is possible to use any image file that, at a minimum, includes image data GD for output by an output device, and information relating to a working color space for performing image processing (image quality adjustment) in an image processing device, such as a personal computer 20. The use of such files enables the original saturation of the image data GD to be reproduced by the output device.

Image files GF containing image data GD and image processing control information Gl are herein considered to include files created by generating association data associating with image processing control information Gl, storing the image data GD and image processing control information Gl in separate files, but enabling the image data GD and image processing control information Gl to be associated by referring to this association data during image processing. While in this case image data GD and image processing control information Gl are stored in separate files, during image processing using the image processing control information GI, the image data GD and image processing control information Gl are indivisibly united, so functionality is substantially the same as with storage in a single file. That is, the use of associated image data GD and image processing control information Gl --at least during image processing-- is included in the definition of image file GF herein. Video files stored on optical media such as CD-ROM, CD-R, DVD-ROM and DVD-RAM are also included.

While the image data generating device and image data output device pertaining to the invention have been shown and described with reference to certain preferred embodiments, the embodiments herein are intended to aid in understanding of the invention, and should not be construed as limiting thereof. It is intended that the present invention cover modifications and improvements provided they fall within the scope of the claims and their equivalents.

## Claims

1. An image pick up device, comprising:
an image data acquisition unit for acquiring image data (GD);
a working color space designating information acquisition unit for acquiring working color space designating information that designates a working color space into which the image data (GD) are to be transformed and then further image-processed including color-space transformation when loaded into an image processing device (20), wherein said working color space has at least in a portion of the gamut thereof a color representation range wider than the sRGB color space; and
an output unit (MC, CV) for outputting said acquired image data (GD) and said working color space designating information associated with said acquired image data (GD).

2. An image pick-up device according to claim 1, further comprising:
a color conversion table-designating information generating unit for generating color conversion table-designating information that designates a color conversion table used to generate said output image data (GD) in an output processing control device that generates output image data (GD) using said image data (GD).

3. An image pick-up device according to claim 2, further comprising:
an image processing control data generating unit for designating image processing conditions in said image processing device (20) with reference to said acquired working color space designating information, wherein said output unit (MC, CV) outputs said image data (GD) associated with said image processing control data as well as with said working color space designating information.

4. An image pick-up device according to claim 3, further comprising:
an image data generating unit for generating said image data (GD); and
a memory unit for storing a multitude of sets of said working color space designating information;
wherein said image data acquisition unit acquires said generated image data (GD); and said working color space designating information acquisition unit acquires said working color space designating information from said memory unit.

5. An image pick-up device according to any of claims 1 to 4l , wherein said output unit (MC, CV) outputs said image data (GD) and said working color space designating information as a single image file.

6. An image pick-up device according to claim 1, wherein said working color space designating information designates a color space having a different coordinate system than the color space of said image data (GD).

7. An image pick-up device according to any of claims 1 to 6, wherein said image pick-up device is a digital still camera, a digital video camera or a scanner.

8. An image pick-up method for use with an image pick-up device according to any of claims 1 to 7, comprising the steps of
acquiring image data (GD) by said image pick-up device;
acquiring, by said image pick-up device, working color space designating information that designates a working color space into which the image data are to be transformed and then further image-processed including color-space transformation when loaded into an image processing device (20), wherein said working color space has at least in a portion of the gamut thereof a color representation range wider than the sRGB color space; and
outputting said acquired image data and said working color space designating information associated with said acquired image data (GD).

9. A computer-readable medium containing a program for performing all the method steps according to claim 8.

10. An image processing system, comprising an image pick-up device according to any of claims 1 to 7 and an image processing device (20), said image processing device comprising:
an image data acquisition unit for acquiring image data (GD) and associated working color space designating information, that designates a working color space, from said pick-up device; and
an image processing unit that transforms said image data (GD) into said color working space and performs image processing including color-space transformation of said transformed image data (GD).

## Patentansprüche

1. Bildaufnahmevorrichtung, die aufweist:
eine Bilddatenerlangungseinheit zum Erlangen der Bilddaten (GD),
eine Arbeitsfarbraumbestimmungsinformationserlangungseinheit zum Erlangen von Arbeitsfarbraumbestimmungsinformationen, die einen Arbeitsfarbraum bestimmen, in den die Bilddaten (GD) zu transformieren sind, und die dann weiter einer Bildverarbeitung einschließlich einer Farbraumumwandlung zu unterziehen sind, wenn sie in eine Bildverarbeitungsvorrichtung (20) geladen werden, wobei der Arbeitsfarbraum mindestens in einem Abschnitt seines Tonumfangs einen Farbrepräsentationsbereich aufweist, der breiter als der sRGB-Farbraum ist, und
eine Ausgabeeinheit (MC, CV) zum Ausgeben der erlangten Bilddaten (GD) und der Arbeitsfarbraumbestimmungsinformationen, die den erlangten Bilddaten (GD) zugeordnet sind.

2. Bildaufnahmevorrichtung nach Anspruch 1, die außerdem aufweist:
eine Farbumwandlungstabellenbestimmungsinformationserzeugungseinheit zum Erzeugen von Farbumwandlungstabellenbestimmungsinformationen, die eine Farbumwandlungstabelle bestimmen, die verwendet wird, um die Ausgangsbilddaten (GD) in einer Ausgangsverarbeitungssteuervorrichtung zu erzeugen, die Ausgangsbilddaten (GD) unter Verwendung der Bilddaten (GD) erzeugt.

3. Bildaufnahmevorrichtung nach Anspruch 2, die außerdem aufweist:
eine Bildverarbeitungssteuerdatenerzeugungseinheit zum Bestimmen von Bildverarbeitungsbedingungen in der Bildverarbeitungsvorrichtung (20) mit Bezug auf die erlangten Arbeitsfarbraumbestimmungsinformationen, wobei die Ausgabeeinheit (MC, CV) die Bilddaten (GD), die den Bildverarbeitungssteuerdaten ebenso wie den Arbeitsfarbraumbestimmungsinformationen zugeordnet sind, ausgibt.

4. Bildaufnahmevorrichtung nach Anspruch 3, die außerdem aufweist:
eine Bilddatenerzeugungseinheit zum Erzeugen der Bilddaten (GD), und
eine Speichereinheit zum Speichern mehrerer Sätze der Arbeitsfarbraumbestimmungsinformationen,
wobei die Bilddatenerlangungseinheit die erzeugten Bilddaten (GD) erlangt, und die Arbeitsfarbraumbestimmungsinformationserlangungseinheit die Arbeitsfarbraumbestimmungsinformationen von der Speichereinheit erlangt.

5. Bildaufnahmevorrichtung nach einem der Ansprüche 1 bis 4, wobei die Ausgabeeinheit (MC, CV) die Bilddaten (GD) und die Arbeitsfarbraumbestimmungsinformationen als eine einzige Bilddatei ausgibt.

6. Bildaufnahmevorrichtung nach Anspruch 1, wobei die Arbeitsfarbraumbestimmungsinformationen einen Farbraum bestimmen, der ein anderes Koordinatensystem als der Farbraum der Bilddaten (GD) aufweist.

7. Bildaufnahmevorrichtung nach einem der Ansprüche 1 bis 6, wobei die Bildaufnahmevorrichtung eine digitale Standbildkamera, eine digitale Videokamera oder ein Scanner ist.

8. Bildaufnahmeverfahren zur Verwendung mit einer Bildaufnahmevorrichtung nach einem der Ansprüche 1 bis 7, das die folgenden Schritte aufweist:
Erlangen von Bilddaten (GD) durch die Bildaufnahmevorrichtung,
Erlangen von Arbeitsfarbraumbestimmungsinformationen durch die Bildaufnahmevorrichtung, die einen Arbeitsfarbraum bestimmen, in den die Bilddaten zu transformieren sind und dann weiter einer Bildverarbeitung einschließlich einer Farbraumtransformation zu unterziehen sind, wenn sie in eine Bildverarbeitungsvorrichtung (20) geladen werden, wobei der Arbeitsfarbraum mindestens in einem Abschnitt seines Tonumfangs einen Farbrepräsentationsbereich aufweist, der breiter als der sRGD-Farbraum ist, und
Ausgeben der erlangten Bilddaten und der Arbeitsfarbraumbestimmungsinformationen, die den erlangten Bilddaten (GD) zugeordnet sind.

9. Computerlesbares Medium, das ein Programm zum Durchführen sämtlicher Verfahrensschritte nach Anspruch 8 enthält.

10. Bildverarbeitungssystem, das eine Bildaufnahmevorrichtung nach einem der Ansprüche 1 bis 7 und eine Bildverarbeitungsvorrichtung (20) aufweist, wobei die Bildverarbeitungsvorrichtung aufweist:
eine Bilddatenerlangungseinheit zum Erlangen von Bilddaten (GD) und zugeordneten Arbeitsfarbraumbestimmungsinformationen, die einen Arbeitsfarbraum bestimmen, von der Aufnahmevorrichtung, und
eine Bildverarbeitungseinheit, die die Bilddaten (GD) in den Farbarbeitsraum transformiert und eine Bildverarbeitung einschließlich einer Farbraumtransformation der transformierten Bilddaten (GD) durchführt.

## Revendications

1. Dispositif de prise d'image, comprenant :
une unité d'acquisition de données image pour acquérir des données image (GD) ;
une unité d'acquisition d'informations de désignation d'espace colorimétrique de travail pour acquérir des informations de désignation d'espace colorimétrique de travail qui désignent un espace colorimétrique de travail dans lequel les données image (GD) doivent être transformées puis subir un traitement d'image comprenant la transformation de l'espace colorimétrique lorsqu'elles sont chargées dans un dispositif de traitement d'image (20), où ledit espace colorimétrique de travail a au moins dans une portion de la gamme de couleurs de celui-ci une plage de représentation de couleur plus large que l'espace colorimétrique sRGB ; et
une unité de sortie (MC, CV) pour sortir lesdites données image acquises (GD) et
lesdites informations de désignation d'espace colorimétrique de travail associées aux dites données image acquises (GD).

2. Dispositif de prise d'image selon la revendication 1, comprenant en outre :
une unité de génération d'informations de désignation de table de conversion de couleur pour générer des informations de désignation de table de conversion de couleur qui désignent une table de conversion de couleur utilisée pour générer lesdites données image de sortie (GD) dans un dispositif de commande de traitement de sortie qui génère des données image de sortie (GD) en utilisant lesdites données image (GD).

3. Dispositif de prise d'image selon la revendication 2, comprenant en outre :
une unité de génération de données de commande de traitement d'image pour désigner des conditions de traitement d'image dans ledit dispositif de traitement d'image (20) en référence auxdites informations de désignation d'espace colorimétrique de travail acquises, où ladite unité de sortie (MC, CV) sort lesdites données image (GD) associées auxdites données de commande de traitement d'image de même qu'auxdites informations de désignation d'espace colorimétrique de travail.

4. Dispositif de prise d'image selon la revendication 3, comprenant en outre :
une unité de génération de données image pour générer lesdites données image (GD) ; et
une unité de mémoire pour stocker une multitude d'ensembles desdites informations de désignation d'espace colorimétrique de travail ;
où ladite unité d'acquisition de données image acquiert lesdites données image générées (GD) ; et ladite unité d'acquisition d'information de désignation d'espace colorimétrique de travail acquiert lesdites informations de désignation d'espace colorimétrique de travail de ladite unité de mémoire.

5. Dispositif de prise d'image selon l'une quelconque des revendications 1 à 4, dans lequel ladite unité de sortie (MC, CV) sort lesdites données image (GD) et lesdites informations de désignation d'espace colorimétrique de travail sous la forme d'un fichier image unique.

6. Dispositif de prise d'image selon la revendication 1, dans lequel lesdites informations de désignation d'espace colorimétrique de travail désignent un espace colorimétrique ayant un système de coordonnées différent de l'espace colorimétrique desdites données image (GD).

7. Dispositif de prise d'image selon l'une quelconque des revendications 1 à 6, dans lequel ledit dispositif de prise d'image est un appareil photo numérique, une caméra vidéo numérique ou un scanner.

8. Procédé de prise d'image pour une utilisation avec un dispositif de prise d'image selon l'une quelconque des revendications 1 à 7, comprenant les étapes consistant à :
acquérir des donnés image (GD) par ledit dispositif de prise d'image ;
acquérir, par ledit dispositif de prise d'image, des informations de désignation d'espace colorimétrique de travail qui désignent un espace colorimétrique de travail dans lequel les données image doivent être transformées puis subir un traitement d'image comprenant la transformation de l'espace colorimétrique lorsqu'elles sont chargées dans un dispositif de traitement d'image (20), où ledit espace colorimétrique de travail a au moins dans une portion de la gamme de couleurs de celui-ci une plage de représentations de couleur plus large que l'espace colorimétrique sRGB ; et
sortir lesdites données image acquises et lesdites informations de désignation d'espace colorimétrique de travail associées auxdites données image acquises (GD).

9. Support lisible par ordinateur contenant un programme pour effectuer toutes les étapes du procédé selon la revendication 8.

10. Système de traitement d'image, comprenant un dispositif de prise d'image selon l'une quelconque des revendications 1 à 7 et un dispositif de traitement d'image (20), ledit dispositif de traitement d'image comprenant :
une unité d'acquisition de données image pour acquérir des données image (GD) et des informations de désignation d'espace colorimétrique de travail associées, qui désignent un espace colorimétrique de travail, dudit dispositif de prise ; et
une unité de traitement d'image qui transforme lesdites données image (GD) en ledit espace colorimétrique de travail et effectue un traitement d'image comprenant la transformation de l'espace colorimétrique desdites données image transformées (GD).
